# EUROPÄISCHE PATENTSCHRIFT

(11) **EP 4 413 838 B1**
(45) Veröffentlichungstag und Bekanntmachung des Hinweises auf die Patenterteilung: **05.08.2026**
(21) Anmeldenummer: 24155299.1
(22) Anmeldetag: 01.02.2024
(51) Int. Cl.: A01B 69/04, A01B 76/00

(54) **VERFAHREN ZUM STEUERN VON MASCHINENFUNKTIONEN EINER LANDWIRTSCHAFTLICHEN MASCHINE**
METHOD FOR CONTROLLING MACHINE FUNCTIONS OF AN AGRICULTURAL MACHINE
PROCÉDÉ DE COMMANDE DE FONCTIONS DE MACHINE D'UNE MACHINE AGRICOLE

(30) Priorität: 01.02.2023 AT 500582023
(43) Veröffentlichungstag der Anmeldung: 14.08.2024
(73) Patentinhaber: Pöttinger Landtechnik GmbH, 4710 Grieskirchen (AT)
(72) Erfinder: BUMBERGER, Rainer, 4710 Grieskirchen (AT); ALTMANN, Jürgen, 4710 Grieskirchen (AT); MALLINGER, Stefan, 4710 Grieskirchen (AT); ANTLINGER, Johannes, 4710 Grieskirchen (AT)
(74) Vertreter: Burger, Hannes

(56) Entgegenhaltungen:
- EP-A1- 4 085 747
- EP-B1- 3 232 760
- SE-A1- 1 950 658
- US-A1- 2014 371 975
- US-A1- 2015 366 130
- US-A1- 2017 359 955
- US-A1- 2022 124 974
- US-A1- 2022 192 075

## Beschreibung

Die Erfindung betrifft ein Verfahren zum Steuern und/oder Regeln von Maschinenfunktionen einer landwirtschaftlichen Maschine und ein landwirtschaftliches System umfassend eine landwirtschaftliche Maschine mit einem Beschleunigungssensor und eine Steuer- und Regelvorrichtung, wobei die Steuer- und Regelvorrichtung zum Durchführen des Verfahrens ausgebildet ist.

Die EP3232760B1 beschreibt ein Verfahren zum Steuern eines landwirtschaftlichen Gerätes, das Folgendes umfasst:
- Ziehen des landwirtschaftlichen Gerätes über eine Arbeitsfläche;
- Identifizieren, während das Gerät bewegt wird, einer Abweichung zwischen einer Längsrichtung des landwirtschaftlichen Gerätes und einer tatsächlichen Zugrichtung des landwirtschaftlichen Gerätes;
- Erzeugen eines Justierwertes, wenn die Abweichung einen Schwellenwert überschreitet, und
- auf der Basis des Justierwertes, Erzeugen eines Steuersignals für mindestens einen Aktuator an dem landwirtschaftlichen Gerät so, dass die Abweichung reduziert oder beseitigt wird, gekennzeichnet durch,
mit Hilfe des Aktuators:
- Ändern der Position und/oder Orientierung eines oder mehrerer Werkzeuge an dem landwirtschaftlichen Gerät auf der Basis des Steuersignals, wobei die Änderung eine Änderung der Tiefe des Werkzeugs bewirkt, und/oder
- Veranlassen einer Drehung um mindestens eine vertikale Achse mindestens eines Rades oder einer Rolle an dem landwirtschaftlichen Gerät auf der Basis des Steuersignals, und/oder
- selektives Antreiben oder Bremsen eines oder mehrerer Räder, Walzen oder Rollen an dem landwirtschaftlichen Gerät auf der Basis des Steuersignals, und/oder
- Ändern der Position und/oder Orientierung mindestens eines Rades oder einer Rolle an dem landwirtschaftlichen Gerät auf der Basis des Steuersignals.

Da dieses Verfahren lediglich auf der Abweichung zwischen der Längsrichtung des landwirtschaftlichen Gerätes und der tatsächlichen Zugrichtung des landwirtschaftlichen Gerätes basiert, können Falschausrichtungen des landwirtschaftlichen Gerätes gegenüber des Zugfahrzeugs oder eines bestimmungsgemäßen Arbeitsbereichs des landwirtschaftlichen Gerätes, insbesondere auch bei abrupten oder abgleitenden Relativbewegungen von Fahrzeug und Gerät zueinander nur unzulänglich ausgeglichen werden.

Aufgabe der vorliegenden Erfindung war es, die Nachteile des Standes der Technik zu überwinden und ein Verfahren zur Verfügung zu stellen, mittels dessen die Nachteile des Standes der Technik überwunden werden.

Diese Aufgabe wird durch ein Verfahren und ein landwirtschaftliches System gemäß den Ansprüchen gelöst.

Das erfindungsgemäße Verfahren nach Anspruch 1 zum Steuern und/oder Regeln von Maschinenfunktionen einer landwirtschaftlichen Maschine umfasst die Verfahrensschritte:
- Bewegen und/oder Antreiben der landwirtschaftlichen Maschine über einen Arbeitsbereich einer Arbeitsfläche;
- Erfassen der Richtung und Größe der Beschleunigungen der landwirtschaftlichen Maschine mittels eines Beschleunigungssensors;
- Berechnen einer ersten Bewegung der landwirtschaftlichen Maschine auf Basis der erfassten Beschleunigungen mittels einer Steuer- und Regelvorrichtung;
- automatisiertes Einleiten von Steuer- bzw. Regelmaßnahmen beim Betrieb der landwirtschaftlichen Maschine auf Basis der ersten Bewegung der landwirtschaftlichen Maschine mittels der Steuer- und Regelvorrichtung.

Vorteilhaft ist dabei, dass die Fahrsicherheit der landwirtschaftlichen Maschine dahingehend verbessert ist, als dass bei bestimmten Bewegungs-Szenarien der landwirtschaftlichen Maschine automatisiert Steuer- bzw. Regelmaßnahmen einleitbar sind, um die landwirtschaftliche Maschine zu schützen bzw. um auch in weiterer Folge das Handhaben bzw. Bedienen der landwirtschaftlichen Maschine für einen Benutzer einfacher zu gestalten oder zu vereinfachen, um somit weiter die Sicherheit zu erhöhen. Beispielhaft ergibt sich durch die Anwendung des erfindungsgemäßen Verfahrens die Möglichkeit, dass eine Rückwärtsfahrt der landwirtschaftlichen Maschine automatisiert erkannt werden kann und als beispielhafte Steuer- bzw. Regelmaßnahme ein Anheben der landwirtschaftlichen Maschine oder von zumindest Teilen der landwirtschaftlichen Maschine einzuleiten, um die Rückwärtsfahrt sicher durchführen zu können. Auch kann so automatisiert auf eine Fehlbedienung eines Bedieners der landwirtschaftlichen Maschine reagiert werden.

Des Weiteren können durch das erfindungsgemäße Verfahren automatisiert ereignisbasierte Steuer- bzw. Regelmaßnahmen bei bestimmten Bewegungen bzw. ungewollten oder unerwünschten Bewegungen der landwirtschaftlichen Maschine eingeleitet werden. Beispielsweise kann bei einem Abrutschen der landwirtschaftlichen Maschine während einer Bewegung derselben in einem Schräghang eine Gegenmaßnahme eingeleitet werden, um das Abrutschen zu korrigieren und so weiterhin dem, für die landwirtschaftliche Maschine vorgesehenen Arbeitsbereich folgen zu können. Somit wird das Handhaben der landwirtschaftlichen Maschine erheblich vereinfacht und somit auch die sichere Handhabung derselben verbessert. Auch wird somit die Präzision der Bestellung oder Bearbeitung mit der landwirtschaftlichen Maschine verbessert, was einen höheren Ausnützungsgrad bei der Bestellung bzw. Bearbeitung einer Arbeitsfläche mit sich bringt.

Ferner kann vorgesehen sein, dass die Richtung und Größe der Beschleunigung mittels des Beschleunigungssensors in einem dreidimensionalen Koordinatensystem erfasst wird.

Der Beschleunigungssensor kann dabei derart ausgebildet sein, dass dieser Messwerte für Beschleunigungen bzw. Linearbeschleunigungen in alle drei Richtungen eines dreidimensionalen kartesischen Koordinatensystems sowie auch zu den Achsen des Koordinatensystems zuordbare Drehbeschleunigungen erfassen kann, sodass Die Beschleunigung der landwirtschaftlichen Maschine im dreidimensionalen Koordinatensystem vollständig erfassbar ist.

Erfindungsgemäß umfasst das Verfahren folgende Verfahrensschritte:
- Bewegen der landwirtschaftlichen Maschine mittels eines Zugfahrzeugs;
- Erfassen der Richtung und Größe von zumindest einem Bewegungsparameter umfassend Ruck, Beschleunigung, Geschwindigkeit oder Wegstrecke des land-wirtschaftlichen Antriebsfahrzeugs;
- Berechnen einer zweiten Bewegung des Zugfahrzeugs auf Basis des zumindest einen Bewegungsparameters mittels der Steuer- und Regelvorrichtung;
- Berechnen einer Soll-Bewegung der landwirtschaftlichen Maschine auf Basis der zweiten Bewegung des Zugfahrzeugs mittels der Steuer- und Regelvorrichtung;
- Berechnen einer Abweichung zwischen der ersten Bewegung und der Soll-Bewegung der landwirtschaftlichen Maschine mittels einer Steuer- und Regelvorrichtung;
- Anpassen der Steuer- bzw. Regelmaßnahmen durch Anpassungsparameter, wobei die Anpassungsparameter auf Basis der Abweichung berechnet werden.

Vorteilhaft ist dabei, dass somit eine verbesserte und effektivere Bearbeitung bzw. Bestellung einer Arbeitsfläche ermöglicht ist, da Abweichungen der ersten Bewegung der landwirtschaftlichen Maschine automatisiert durch die Berechnung der Abweichung zur Soll-Bewegung und das Anpassen der Steuer- bzw. Regelmaßnahmen ausgeglichen werden können. Beispielweise ist ein Szenario denkbar, bei welchem die Zugmaschine die landwirtschaftliche Maschine quer zu einem Schräghang bewegt und die landwirtschaftliche Maschine relativ zum Zugfahrzeug eine Auslenkung bzw. ein Abrutschen im Schräghang erfährt. Entsprechend der Soll-Bewegung ergibt sich nun eine Abweichung der ersten Bewegung, sodass entsprechende Anpassungsparameter, je nach Größe und zeitlichem Gradient des Abrutschens ermittelt werden können um dem Abrutschen der landwirtschaftlichen Maschine entgegenwirken zu können. Somit kann das Abrutschen der landwirtschaftlichen Maschine automatisiert und aktiv in der Bewegung der landwirtschaftlichen Maschine korrigiert werden, um weiterhin dem Arbeitsbereich folgen zu können. Dadurch wird die Bearbeitung bzw. Bestellung einer Anbaufläche erheblich vereinfacht und Flächenüberschneidungen beim Bearbeiten bzw. Bestellen der Anbauflächen werden minimiert, da der Arbeitsbereich der landwirtschaftlichen Maschine auf verbesserte Weise einhaltbar ist.

Ferner kann vorgesehen sein, dass das Einleiten von Steuer- bzw. Regelmaßnahmen ereignisbasiert durch Überschreitung von Schwellwerten für die Größe und/oder für den zeitlichen Gradient der Größe von der Abweichung, von der ersten Bewegung und/oder von der zweiten Bewegung mittels einer Entscheidungslogik der Steuer- und Regelvorrichtung vorgegeben wird.

Wenn eine Entscheidungslogik in die Steuer- und Regelvorrichtung integriert ist, kann dies im Hinblick auf die Vielfalt der Reaktionsmöglichkeiten auf unterschiedlichen Szenarien der ersten Bewegung, als auch im Hinblick auf die mögliche Anwendungsvielfalt für unterschiedliche landwirtschaftliche Maschinen vorteilhaft sein. Beispielsweise kann so eine Drehbeschleunigung mit einer gewissen Größe und einem gewissen zeitlichen Gradienten in Kombination mit einer Linearbeschleunigung mit einer gewissen Größe und einem gewissen zeitlichen Gradienten in der Entscheidungslogik ein erstes Ereignis definieren, das von weiteren Ereignissen mit deren spezifischen Werten für Beschleunigungen unterschiedliche ist und somit eine nur für dieses erste Ereignis vorgesehene Steuer- bzw. Regelmaßnahme auslösen um auf das erste Ereignis zu reagieren. Weiters ist es denkbar, dass in der Entscheidungslogik durch ein Erkennen und Klassifizieren von Messwerten des Beschleunigungssensors eine Erkennung der Type der landwirtschaftlichen Maschine ermöglicht ist oder zumindest, dass je Type der landwirtschaftlichen Maschine spezifische Steuer- bzw. Regelmaßnahmen hinterlegt sind.

Darüber hinaus kann vorgesehen sein, dass die Richtung und Größe der Beschleunigungen der landwirtschaftlichen Maschine in der Steuer- und Regelvorrichtung gespeichert werden, wobei mittels einer Erkennung von Grenzwertüberschreitungen der Größe der Beschleunigungen eine Zustandsüberwachung der landwirtschaftlichen Maschine durchgeführt wird.

Damit kann die Sicherheit des Betriebs der landwirtschaftlichen Maschine weiter erhöht werden, das mittels der Zustandsüberwachung während der Verwendung der landwirtschaftlichen Maschine Schäden an der gleichen erkennbar werden. Weiterführend kann so auch die Anbindung der landwirtschaftlichen Maschine an das Zugfahrzeug überwacht werden, was wiederum ein sicheres Arbeiten mit der landwirtschaftlichen Maschine bzw. mit dem gesamten landwirtschaftlichen System umfassend die landwirtschaftliche Maschine und das Zugfahrzeug verbessert.

Vorteilhaft ist auch eine Ausprägung, gemäß welcher vorgesehen sein kann, dass das Steuern und/oder Regeln der Maschinenfunktionen der landwirtschaftlichen Maschine zyklisch in Zeitschritten von 10ms bis 500ms durchgeführt wird.

Vorteilhaft ist dabei, dass die Erfassung und Berechnung der Abweichung bzw. der ersten Bewegung in sehr geringen Zeitschritten durchgeführt wird und somit nahezu in Echtzeit Steuer- bzw. Regelmaßnahmen automatisiert einleitbar sind.

Gemäß einer Weiterbildung ist es möglich, dass die Steuer- bzw. Regelmaßnahmen durch Vorgabe von Justierparametern zum selektiven Antreiben und/oder Bremsen eines oder mehrerer Räder, Walzen oder Rollen an der landwirtschaftlichen Maschine durchgeführt werden.

Ferner kann es auch zweckmäßig sein, wenn die Steuer- bzw. Regelmaßnahmen durch Vorgabe von Justierparametern zum selektiven Drehen eines oder mehrerer Räder, Walzen oder Rollen an der landwirtschaftlichen Maschine durchgeführt werden.

Darüber hinaus kann weiters vorgesehen sein, dass die Steuer- bzw. Regelmaßnahmen durch Vorgabe von Justierparametern zum Veranlassen der Bewegung von zumindest einem Befestigungspunkt der landwirtschaftlichen Maschine am Zugfahrzeug durchgeführt werden.

Dadurch kann selektiv auf unterschiedliche erste Bewegungen der landwirtschaftlichen Maschine reagiert werden. Beispielsweise kann so auf einfache Weise ein Abrutschen oder Abgleiten der landwirtschaftlichen Maschine ausgeglichen werden oder auch eine Kurvenfahrt des landwirtschaftlichen Systems in vorteilhafter Weise für die landwirtschaftliche Maschine beeinflusst werden.

Des Weiteren kann vorgesehen sein, dass Messwerte des Beschleunigungssensor mittels der Steuer- und Regelvorrichtung drahtlos empfangen werden.

Vorteilhaft ist dabei, dass der Beschleunigungssensor auf einfache Weise an der landwirtschaftlichen Maschine angebracht werden kann und auch auf einfache Weise ausgetauscht werden kann. Weiters sind somit auch unterschiedliche Produktgenerationen von Beschleunigungssensoren verwendbar, sofern die Datenübertragung zur Steuer- und Regelvorrichtung weiterhin kompatibel ist.

Gemäß einer besonderen Ausprägung ist es möglich, dass der Beschleunigungssensor mittels eines Magnets, einer Klebeschicht oder einer form- und/oder reibschlüssigen Positioniervorrichtung an der landwirtschaftlichen Maschine angebracht wird, wobei der Beschleunigungssensor von der landwirtschaftlichen Maschine zerstörungsfrei entfernbar ist.

Wiederum ist dabei vorteilhaft, dass ein Beschleunigungssensor auf einfache Weise austauschbar ist. Des Weiteren können so, insbesondere im Zusammenwirken mit einer drahtlosen Datenübertragung, mehrere landwirtschaftliche Maschinen jeweils mit einem Beschleunigungssensor bestückt werden, wobei die jeweilige landwirtschaftliche Maschine dann mit der Steuer- und Regelvorrichtung automatisiert steuerbar ist.
sprechend einer vorteilhaften Weiterbildung kann vorgesehen sein, dass der Beschleunigungssensor mittels eines Nanogenerators durch Energiequellen umfassend Vibration, Umgebungstemperatur, Luftströmung oder Sonneneinstrahlung elektrisch versorgt wird.

Dadurch wird das gesamte System umfassend den Beschleunigungssensor und die landwirtschaftliche Maschine für eine lange Einsatzdauer sehr robust, da keine externe

Energieversorgung für den Beschleunigungssensor vorgesehen werden muss. In weiterer Folge ist so auch der Austausch des Beschleunigungssensors vereinfacht und die Sicherheit gegenüber einem ungewollten Ausfall des Systems durch das ungewollte Trennen einer externen Energieversorgung entfällt.

Insbesondere kann es vorteilhaft sein, wenn der Beschleunigungssensor mittels der Steuer- und Regelvorrichtung vor und/oder nach dem Bewegen der landwirtschaftlichen Maschine über die Ackerfläche kalibriert wird.

Dadurch wird die Genauigkeit und vor allem die Langzeitstabilität des landwirtschaftlichen Systems verbessert, da ein Beschleunigungssensor einen ungewünschten Messbereichsversatz aufweisen kann. Dieser Messbereichsversatz wird durch das wiederholte Kalibrieren des Beschleunigungssensors und durch Abspeichern entsprechender Kompensationsparameter in der Steuer- und Regelvorrichtung kompensiert, wodurch sich die Sicherheit des Verfahrens verbessert.

Gemäß einer Weiterbildung ist es möglich, dass in der Entscheidungslogik weiters Positions- bzw. Fahrszenario-Informationen aus der ersten Bewegung bestimmt werden, wobei wenigstens eine Hangneigung absolut zur Erdbeschleunigung, ein Hangrutschen, eine Fahrtgeschwindigkeit, eine Vorwärtsbewegung, eine Rückwärtsfahrt, ein Stoppen oder eine Kurvenfahrt der landwirtschaftlichen Maschine als Positions- bzw. Fahrszenario-Informationen umfasst sind.

Des Weiteren kann vorgesehen sein, dass eine Differenzierung zwischen der Kurvenfahrt und der Hangneigung bzw. dem Hangrutschen wenigstens auf Basis einer Drehbeschleunigung um eine Achse entlang der Fahrtrichtung und einer Längsbeschleunigung quer zur Achse entlang der Fahrtrichtung der landwirtschaftlichen Maschine ermittelt bzw. durchgeführt wird.

Vorteilhaft ist dabei, dass für spezifische Positions- bzw. Fahrszenarien auf für den jeweiligen Typ einer landwirtschaftlichen Maschine entsprechende Steuer- bzw. Regelmaßnahmen einleitbar sind.

Ferner kann vorgesehen sein, dass die landwirtschaftliche Maschine eine Ballenpresse mit Aufnahmevorrichtung und Liftachse ist und das Verfahren die folgenden Verfahrensschritte umfasst:
- Anheben der Aufnahmevorrichtung bei Rückwärtsfahrt;
- Anheben der Liftachse bei Kurvenfahrt;
- Anheben der Liftachse bei Rückwärtsfahrt;
- Anheben der Aufnahmevorrichtung bei Kurvenfahrt bei Überschreitung eines Grenzwertes für den Kurvenradius;

Dadurch wird die Sicherheit der Ballenpresse und die Effektivität einer Bearbeitung bzw. von Arbeiten mit der Ballenpresse verbessert. Insbesondere können so beispielsweise bei einem Wendemanöver im Vorgewende automatisiert Steuer- bzw. Regelmaßnahmen eingeleitet werden um so die Effektivität bei der Bearbeitung einer Arbeitsfläche zu erhöhen.

Darüber hinaus kann vorgesehen sein, dass die landwirtschaftliche Maschine ein Mähwerk ist und das Verfahren die folgenden Verfahrensschritte umfasst:
- Anheben des Mähwerks bei Rückwärtsfahrt;
- Verschieben des Mähwerks bei Hangrutschen;
- Verschieben des Mähwerks bei Kurvenfahrt;

Das Verschieben des Mähwerks bei Hangrutschen kann beispielsweise durch Einleiten entsprechender Steuer- bzw. Regelmaßnahmen automatisiert eingeleitet werden, wenn mittels des Beschleunigungssensors eine Drehbeschleunigung um eine Achse des dreidimensionalen Koordinatensystems und eventuell auch in Kombination mit einer entsprechenden Linearbeschleunigung auftritt. Durch die vorgesehene Verfahrensschritte kann so die Sicherheit beim Arbeiten mit dem Mähwerk sowie die Effektivität bei Arbeiten mit dem Mähwerk verbessert werden.

Vorteilhaft ist auch eine Ausprägung, gemäß welcher vorgesehen sein kann, dass die landwirtschaftliche Maschine ein Ladewagen ist und das Verfahren die folgenden Verfahrensschritte umfasst:
- in Mittelstellung bringen und Sperren der in Schwimmstellung befindlichen Nachlaufachse bzw. der Lenkachse bei Rückwärtsfahrt;
- in Mittelstellung bringen und Sperren der in Schwimmstellung befindlichen Nachlaufachse bzw. der Lenkachse beim Überschreiten eines Grenzwertes der Hangneigung;
- in Mittelstellung bringen und Sperren der in Schwimmstellung befindlichen Nachlaufachse bzw. der Lenkachse beim Überschreiten eines Grenzwertes der Geschwindigkeit.

Wenn sich die Nachlaufachse in Schwimmstellung befindet, kann sie entsprechend den auftretenden Kräften eine durch die Kräfte vorgegebene Lenkwinkelstellung einnehmen. Beim in Mittelstellung bringen wird die Nachlaufachse aktiv in die Mittelstellung, sprich geradeausfahrt verbracht. Dies kann beispielsweise mittels eines Aktors erfolgen. Beim Sperren der Nachlaufachse wird diese in der Mittelstellung, in die sie verbracht wurde, blockiert, sodass keine weiteren Lenkwinkelausschläge stattfinden können.

Dadurch kann vor allem die Sicherheit beim Arbeiten mit einem landwirtschaftlichen System umfassend ein Zugfahrzeug und einen Ladewagen verbessert werden. Insbesondere kann es vorteilhaft sein, wenn auf Basis des Erkennens einer Rückwärtsfahrt automatisierte Steuer- bzw. Regelmaßnahmen eingeleitet werden, sodass Beschädigungen der landwirtschaftlichen Maschine, auch beispielsweise bei einer Falschbedienung derselben durch einen Benutzer, vermieden werden können.

Gemäß einer Weiterbildung ist es möglich, dass die landwirtschaftliche Maschine ein Hackgerät ist und das Verfahren die folgenden Verfahrensschritte umfasst:
- Anheben des Hackgeräts bei Rückwärtsfahrt;
- Anheben des Hackgeräts bei Kurvenfahrt bei Überschreitung eines Grenzwertes für den Kurvenradius;
- Verschieben des Hackgeräts bei Hangrutschen;

Wiederum kann so die Sicherheit beim Arbeiten mit dem Hackgerät als landwirtschaftliche Maschine verbessert werden. Auch ist durch das Verfahren bzw. durch die zusätzlichen Verfahrensschritte die Effektivität der Bearbeitung einer Arbeitsfläche mittels des Hackgeräts erhöht, da der Arbeitsbereich auf einfache Weise jederzeit eingehalten werden kann.

Weiters umfasst die Erfindung ein landwirtschaftliches System umfassend eine landwirtschaftliche Maschine mit einem Beschleunigungssensor und eine Steuer- und Regelvorrichtung, wobei die Steuer- und Regelvorrichtung zum Durchführen des erfindungsgemäßen Verfahrens ausgebildet ist.

Verteilhafterweise kommen beim erfindungsgemäßen landwirtschaftlichen System unter Anwendung des erfindungsgemäßen Verfahrens dieselben Vorteile zum Tragen, welche bereits zu Beginn der Beschreibungseinleitung angeführt wurden. In jedem Fall sind durch die Ausgestaltung des landwirtschaftlichen Systems die Sicherheit, die Effektivität und die Robustheit verbessert bzw. die Fehleranfälligkeit insbesondere bei Fehlverhalten eines Benutzers verringert.

Darüber hinaus kann vorgesehen sein, dass die landwirtschaftliche Maschine eine Positioniervorrichtung für den Beschleunigungssensor umfasst. Damit kann der Beschleunigungssensor ausgetauscht werden, wobei beim abermaligen Einbau wiederum eine gleiche Ausrichtung des neuen Beschleunigungssensors in der Positioniereinrichtung wie auch des alten Beschleunigungssensors gewährleistet werden kann. Somit wird kein Referenzieren bzw. keine Positionseinstellung des neuen Beschleunigungssensors benötigt, wodurch die Robustheit des Systems durch eine möglichst einfache Handhabung verbessert ist.

Zum besseren Verständnis der Erfindung wird diese anhand der nachfolgenden Figuren näher erläutert.

Es zeigen jeweils in stark vereinfachter, schematischer Darstellung:
- Fig. 1: einer landwirtschaftlichen Maschine mit einem Zugfahrzeug;
- Fig. 2: des Verfahrensablaufs zum Steuern und/oder Regeln der Maschinenfunktionen der landwirtschaftlichen Maschine.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

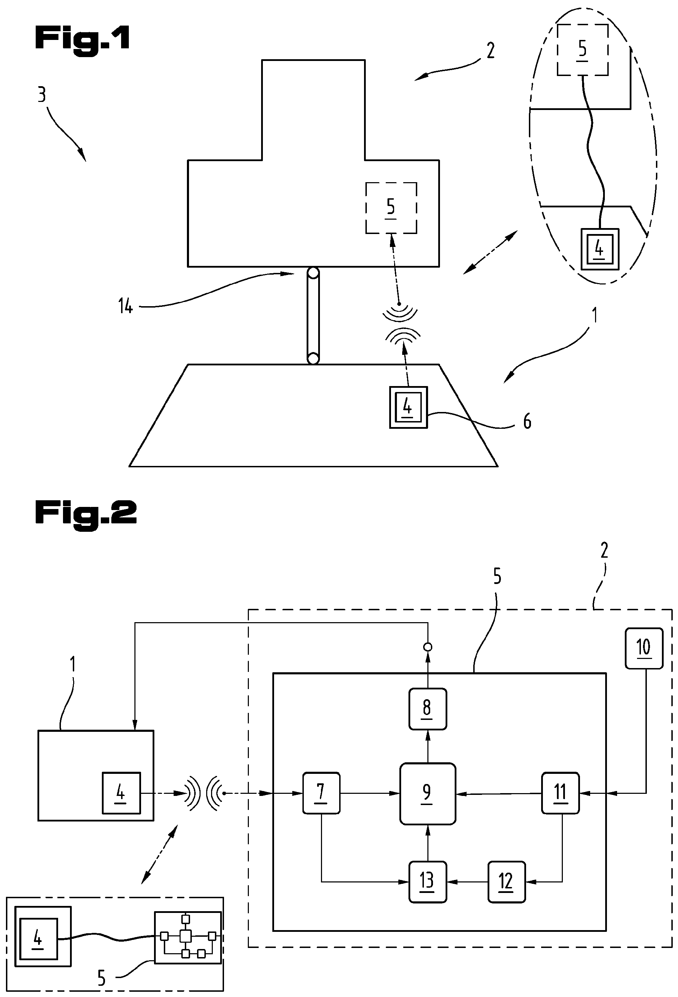

In der Fig. 1 ist eine stark vereinfacht, schematische Darstellung einer landwirtschaftlichen Maschine 1 mit einem Zugfahrzeug 2 dargestellt. Zusätzlich dazu ist in der Fig. 2 eine stark vereinfachte, schematische Darstellung des Verfahrensablaufs zum Steuern und/oder Regeln der Maschinenfunktionen der landwirtschaftlichen Maschine 1 dargestellt. In Fig. 2 werden für gleiche Teile gleiche Bezugszeichen bzw. Bauteilbezeichnungen wie in der Fig. 1 verwendet. Um der besseren Verständlichkeit Willen werden die beiden Darstellungen aus Fig. 1 und Fig. 2 im Folgenden gemeinsam beschrieben und es wird nicht dezidiert auf die jeweilige Darstellung verwiesen.

Wenn die landwirtschaftliche Maschine 1 über eine Arbeitsfläche oder einen Arbeitsbereich einer Arbeitsfläche bewegt wird bzw. vom Zugfahrzeug 2 angetrieben wird, kann es je nach Beschaffenheit der Arbeitsfläche zu ungewollten und möglicherweise ruckartigen Relativbewegungen der landwirtschaftlichen Maschine 1 gegenüber der für die landwirtschaftlichen Maschine 1 vorgesehenen Bewegung bzw. Bewegungsrichtung kommen. Diese Relativbewegungen können beispielsweise durch Unebenheiten der Arbeitsfläche oder durch eine Hangneigung der Arbeitsfläche induziert werden. Des Weiteren kann es vorkommen, dass ein Fahrer des Zugfahrzeugs 2 eine Bewegungsänderung des landwirtschaftlichen Systems 3, umfassend die landwirtschaftliche Maschine 1 und das Zugfahrzeug 2, eine Bewegung an der landwirtschaftlichen Maschine 1 mittels Steuern des Zugfahrzeugs 2 einleitet, wobei die landwirtschaftliche Maschine 1 nicht für diese Bewegung vorgesehen ist oder für diese Bewegung vorbereitet ist.

Um demnach die Bewegung bzw. Bewegungsänderungen der landwirtschaftlichen Maschine 1 erkennbar machen zu können, um dann darauf reagieren zu können, kann an der landwirtschaftlichen Maschine 1 ein Beschleunigungssensor 4 vorgesehen sein. Der Beschleunigungssensor 4 kann dabei derart ausgestaltet sein, dass dieser eine lineare Beschleunigung in drei Koordinatenrichtungen eines dreidimensionalen Kartesischen Koordinatensystems sowie zugehörige Drehbeschleunigungen um die Koordinatenachsen erfassen kann. Es kann weiters vorgesehen sein, dass der Beschleunigungssensor 4 die Richtung und Größe der Beschleunigungen der landwirtschaftlichen Maschine 1 in zyklischen Abständen messen kann. Diese zyklischen Abstände bzw. das zyklische Wiederholen kann in Zeitschritten aus einem Zeitschrittbereich, welcher Zeitschrittbereich 10 ms bis 500 ms umfasst, ausgewählt sein. Der Beschleunigungssensor 4 kann in einer dafür vorgesehenen Positioniervorrichtung 6 an der landwirtschaftlichen Maschine 1 positioniert werden. Durch die Positioniervorrichtung 6 kann der Beschleunigungssensor 4 an der landwirtschaftlichen Maschine 1 immer wieder lagerichtig positioniert werden, falls der Beschleunigungssensor 4 austauschbar bzw. abnehmbar wäre. Jedoch ist es auch denkbar, dass der Beschleunigungssensor 4 mittels eines Magnets oder einer Klebeschicht an der landwirtschaftlichen Maschine 1 positionierbar bzw. haltbar ist. Jedenfalls kann es von Vorteil sein, wenn der Beschleunigungssensor 4 zerstörungsfrei von der landwirtschaftlichen Maschine 1 wieder entfernbar oder austauschbar ist.

Des Weiteren kann eine Steuer- und Regelvorrichtung 5 vorgesehen sein, wobei vom Beschleunigungssensor 4 ermittelte Beschleunigungswerte drahtlos oder alternativ kabelgebunden von der Steuer- und Regelvorrichtung 5 erfasst werden können. Die Steuer- und Regelvorrichtung 5 kann dabei am Zugfahrzeug 2 oder auch an der landwirtschaftlichen Maschine 1 positioniert sein.

Mittels der Steuer- und Regelvorrichtung 5 kann auf Basis der vom Beschleunigungssensor 4 ermittelten Beschleunigungswerte eine erste Bewegung 7 der landwirtschaftlichen Maschine 1 berechnet werden. Diese erste Bewegung 7 kann in Form von Bewegungsgleichungen bzw. in Form von inkrementellen Werten für Ruck, Beschleunigung, Geschwindigkeit und Weg für die landwirtschaftliche Maschine 1 in der Steuer- und Regelvorrichtung 5 vorliegen. Auf Basis der ersten Bewegung der landwirtschaftlichen Maschine 1 können mittels der Steuer- und Regelvorrichtung 5 Steuer- bzw. Regelmaßnahmen 8 automatisiert eingeleitet werden. Dadurch wird die Möglichkeit geschaffen, dass beispielsweise bei einem Hangdriften der landwirtschaftlichen Maschine diese Hangdriften mittels der Steuer- und Regelvorrichtung 5 erkennbar ist und automatisiert eine Gegenbewegung einleitbar ist. Die Steuer- bzw. Regelmaßnahmen 8 können dabei beispielsweise direkt an die landwirtschaftliche Maschine 1 vorgegeben werden. Es ist aber auch denkbar, dass die Steuer- bzw. Regelmaßnahmen 8 an eine Maschinensteuerung oder Peripherie-Gerätesteuerung des Zugfahrzeugs 2 übermittelt werden um darauffolgend geeignete Steuerbefehle and die landwirtschaftliche Maschine 1 zu übermitteln oder diese direkt vom Zugfahrzeug 2 aus anzusteuern. Weiters bzw. alternativ kann die Möglichkeit vorgesehen sein, dass die Steuer- bzw. Regelmaßnahmen 8 drahtlos oder kabelgebunden an die landwirtschaftliche Maschine 1 übertragen werden.

Die Steuer- und Regelvorrichtung 5 kann eine Entscheidungslogik 9 umfassen, wobei die Entscheidungslogik 9 Ereignis-basiert bzw. Szenarien-basiert unter Einbeziehung der ersten Bewegung 7 entsprechende Steuer- bzw. Regelmaßnahmen 8 festlegen kann.

Zusätzlich kann vorgesehen sein, dass vom Zugfahrzeug 2 zumindest ein Bewegungsparameter 10 erfasst wird. Zum Erfassen des Bewegungsparameters 10 kann wiederum ein Beschleunigungssensor verwendet werden. Es ist jedoch auch denkbar, dass bereits vorhandene Parameter eines Fahrzeugsteuersystems des Zugfahrzeugs 2, beispielsweise vom Fahrzeug-CAN-Bus abgegriffen werden, um den Bewegungsparameter 10 zu erfassen. Ein derartiger Bewegungsparameter 10 kann beispielsweise wiederum durch Ruck, Beschleunigung, Geschwindigkeit oder Weg des Zugfahrzeugs 2 bestimmt sein. Mittels der Steuer- und Regelvorrichtung 5 kann dann eine zweite Bewegung 11 des Zugfahrzeugs 2 auf Basis des Bewegungsparameters 10 ermittelt werden. Diese zweite Bewegung 11 kann in Form von Bewegungsgleichungen bzw. in Form von inkrementellen Werten für Ruck, Beschleunigung, Geschwindigkeit und Weg für das Zugfahrzeug 2 in der Steuer- und Regelvorrichtung 5 vorliegen. Auf Basis der zweiten Bewegung 11 des Zugfahrzeugs 2 kann dann eine Soll-Bewegung 12 der landwirtschaftlichen Maschine 1 berechnet werden. Es kann vorgesehen sein, dass für die Berechnung der Soll-Bewegung 12 aus der zweiten Bewegung eine entsprechende Koordinaten-Transformation vorgesehen ist, sodass die Soll-Bewegung 12 auf das Koordinatensystem des Beschleunigungssensors 4 auf der landwirtschaftlichen Maschine 1 bezogen wird bzw. auf die erste Bewegung 7 der landwirtschaftlichen Maschine 1 bezogen wird.

Auf Basis der Soll-Bewegung 12 und der ersten Bewegung 7 kann mittels der Steuer- und Regelvorrichtung 5 eine Abweichung 13 berechnet werden. Auf Basis der Kenntnis der Abweichung 13 können Anpassungsparameter mittels der Steuer- und Regelvorrichtung 5 ermittelt bzw. berechnet werden um die Steuer- bzw. Regelmaßnahmen 8 anzupassen.

In der Entscheidungslogik 9 kann das Auswählen bzw. Bereitstellen oder Festlegen der Steuer- bzw. Regelmaßnahmen 8 ereignisbasiert beispielsweise durch Überschreiten von Schwellwerten für die Größe und/oder für den zeitlichen Gradient der Größe für die Abweichung 13, die erste Bewegung 7 und/oder die zweite Bewegung 12 festgelegt sein. Entsprechend der Entscheidungslogik 9 können geeignete Maßnahmen zum Steuern und/oder Regeln der landwirtschaftlichen Maschine 1 bereitgestellt werden.

Weiters ist es denkbar, dass in der Steuer- und Regelvorrichtung 5 die Messwerte des Beschleunigungssensors 4 bzw. der Bewegungsparameter 10 des Zugfahrzeugs 2 gespeichert und/oder über einen längeren Zeitraum aktiv überwacht werden. Es ist auch denkbar, dass die aus den Messwerten des Beschleunigungssensors 4 bzw. aus dem Bewegungsparameter 10 berechneten Werte für beispielsweise die erste Bewegung 7, die zweite Bewegung 11, usw. gespeichert werden und über einen längeren Zeitraum aktiv überwacht werden. Dadurch kann eine aktive Zustandsüberwachung der landwirtschaftlichen Maschine umgesetzt werden. Dabei ist denkbar, dass der Beschleunigungssensor 4 eine Kennung aufweist, mittels welcher Kennung eine eineindeutige Zuordnung der landwirtschaftlichen Maschine 1 zu den vom Beschleunigungssensor 4 gelieferten Messwerten geschaffen werden kann.

Die Steuer- bzw. Regelmaßnahmen 8 können direkt an die landwirtschaftliche Maschine 1 übermittelt werden. Es ist auch denkbar, dass die Steuer- und Regelmaßnahmen 8 vom Zugfahrzeug 2 verarbeitet werden. Beispielsweise ist es denkbar, dass mittels der Steuer- bzw. Regelmaßnahmen 8 Justierparameter vorgegeben werden. Dabei sind unterschiedliche Ausführungsmöglichkeiten durch die Justierparameter denkbar. Beispielhaft kann vorgesehen sein, dass mittels der Justierparameter ein Rad, eine Rolle, eine Walze oder mehrere Räder, Rollen oder Walzen selektiv angetrieben und/oder gebremst oder gedreht werden. Auch ist es denkbar, dass durch die Justierparameter die Bewegung eines Befestigungspunktes 14 der landwirtschaftlichen Maschine 1 am Zugfahrzeug 2 selektiv gesteuert wird.

Weiters kann auch vorgesehen sein, dass der Beschleunigungssensor 4 mittels einem integrierten Nanogenerator energetisch versorgt wird. Als Energiequelle für den Nanogenerator sind dabei unterschiedlichste Energiequellen wie beispielsweise Sonneneinstrahlung, Wärme, Vibrationen, Luftströmung oder andere denkbar. Beispielsweise kann hierbei der Seebeck-Effekt oder der Piezoelektrische-Effekt genutzt werden um eine einfache und vor allem autarke Energiebereitstellung für den Beschleunigungssensor 4 zu ermöglichen.

Da der Beschleunigungssensor 4 über dessen Lebensdauer bzw. Einsatzzeit einem Drifteffekt unterliegen kann, ist es denkbar, dass beim Stillstand der landwirtschaftlichen Maschine 1 bzw. des Zugfahrzeugs 2, also vor und/oder nach der Bewegung über die Ackerfläche, von der Steuer- und Regelvorrichtung 5 eine Kalibrierung des Beschleunigungssensors 4 durchgeführt wird.

Mittels dem Beschleunigungssensor 4 und der Steuer- und Regelvorrichtung 5 kann für alle möglichen Typen von landwirtschaftlichen Maschinen 1 eine Rückwärtsfahrt erkannt werden. Entsprechend dem Typ der landwirtschaftlichen Maschine 1 kann dann als geeignete Steuer- bzw. Regelmaßnahme 8 bei Rückwärtsfahrt ein Maschinenteil der landwirtschaftlichen Maschine 1 oder die gesamte landwirtschaftliche Maschine 1 angehoben werden, um Schäden an der landwirtschaftlichen Maschine 1 beim Rückwärtsfahren bzw. beim Bewegen entgegen der vorgesehenen Bearbeitungsrichtung der landwirtschaftlichen Maschine 1 zu vermeiden. Auch kann durch das beschriebene Verfahren für jede landwirtschaftliche Maschine 1 eine Seitenverschiebung der landwirtschaftlichen Maschine 1, insbesondere eine Seitenverschiebung relativ zum Zugfahrzeug 2 bei Bewegung schräg zu einem Hang bzw. bei Hangfahrt durch das Einleiten der geeigneten Steuer- bzw. Regelmaßnahmen 8 ausgleichen bzw. kompensieren.

Dies ist beispielsweise beim Bearbeiten von Hangflächen mit einem Mähwerk, einem Hackgerät oder einem Schwader von Vorteil.

Die landwirtschaftliche Maschine 1 kann beispielsweise eine Ballenpresse mit einer Aufnahmevorrichtung und einer Liftachse sein. Bei Rückwärtsfahrt kann durch vorgestelltes Verfahren die Aufnahmevorrichtung und die Liftachse automatisiert angehoben werden. Auch können automatisierte Maßnahmen bei Kurvenfahrt, insbesondere beim Überschreiten eines Grenzwertes für den Kurvenradius oder die Fahrgeschwindigkeit in Zusammenhang mit dem Kurvenradius, eingeleitet werden.

Die landwirtschaftliche Maschine 1 kann beispielsweise ein Mähwerk sein. Dabei können gleich wie bei der Ballenpresse Maßnahmen bei Kurvenfahrten eingeleitet werden. Auch kann durch das vorgestellt Verfahren automatisiert auf das Driften des Mähwerks bei einer Fahrt in einem Schräghang Rücksicht genommen werden bzw. können geeignete Gegenmaßnahmen eingeleitet werden, um das Mähwerk im dafür vorgesehenen Arbeitsbereich der Arbeitsfläche trotz Abdriften im Schräghang zu halten.

Die landwirtschaftliche Maschine 1 kann beispielsweise ein Ladewagen sein. Eine mögliche Steuer- bzw. Regelmaßnahme 8 bei Rückwärtsfahrt, Hangrutschen, übermäßiger Hangneigung oder entsprechender Kurvenfahrt mit entsprechender Geschwindigkeit kann beispielsweise das Sperren der Nachlaufachse bzw. der Lenkachse sein.

Die landwirtschaftliche Maschine 1 kann beispielsweise ein Hackgerät sein. Dabei können ähnliche Steuer- bzw. Regelmaßnahmen 8 bei ähnlichen ereignisbasierten Fahrszenarien wie bereits beschrieben eingeleitet werden um die Fahrsicherheit des landwirtschaftlichen Systems 3, die Präzision der Bearbeitung des Arbeitsbereichs und/oder die Langlebigkeit der landwirtschaftlichen Maschine 1 zu verbessern.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Landwirtschaftliche Maschine
- 2: Zugfahrzeug
- 3: Landwirtschaftliches System
- 4: Beschleunigungssensor
- 5: Steuer- und Regelvorrichtung
- 6: Positioniervorrichtung
- 7: erste Bewegung der landwirtschaftlichen Maschine
- 8: Steuer- bzw. Regelmaßnahmen
- 9: Entscheidungslogik
- 10: Bewegungsparameter des Zugfahrzeugs
- 11: zweite Bewegung
- 12: Soll-Bewegung
- 13: Abweichung
- 14: Befestigungspunkt

## Patentansprüche

1. Verfahren zum Steuern und/oder Regeln von Maschinenfunktionen einer landwirtschaftlichen Maschine (1), das Verfahren umfassend die Verfahrensschritte:
- Bewegen und/oder Antreiben der landwirtschaftlichen Maschine (1) über einen Arbeitsbereich einer Arbeitsfläche mittels eines Zugfahrzeugs (2);
- Erfassen der Richtung und Größe der Beschleunigungen der landwirtschaftlichen Maschine (1) mittels eines Beschleunigungssensors (4);
- Erfassen der Richtung und Größe von zumindest einem Bewegungsparameter (10) umfassend Ruck, Beschleunigung, Geschwindigkeit oder Wegstrecke des Zugfahrzeugs (2);
- Berechnen einer ersten Bewegung (7) der landwirtschaftlichen Maschine (1) auf Basis der erfassten Beschleunigungen mittels einer Steuer- und Regelvorrichtung (5);
- Berechnen einer zweiten Bewegung (11) des Zugfahrzeugs (2) auf Basis des zumindest einen Bewegungsparameters (10) mittels der Steuer- und Regelvorrichtung (5);
- automatisiertes Einleiten von Steuer- bzw. Regelmaßnahmen (8) beim Betrieb der landwirtschaftlichen Maschine (1) auf Basis der ersten Bewegung (7) der landwirtschaftlichen Maschine (1) mittels der Steuer- und Regelvorrichtung (5);
**gekennzeichnet durch** die Verfahrensschritte:
- Berechnen einer Soll-Bewegung (12) der landwirtschaftlichen Maschine (1) auf Basis der zweiten Bewegung (11) des Zugfahrzeugs (2) mittels der Steuer- und Regelvorrichtung (5);
- Berechnen einer Abweichung (13) zwischen der ersten Bewegung (7) und der Soll-Bewegung (12) der landwirtschaftlichen Maschine (1) mittels der Steuer- und Regelvorrichtung (5);
- Anpassen der Steuer- bzw. Regelmaßnahmen (8) durch Anpassungsparameter, wobei die Anpassungsparameter auf Basis der Abweichung (13) berechnet werden.

2. Verfahren nach Anspruch 1, **dadurch gekennzeichnet, dass** die Richtung und Größe der Beschleunigung mittels des Beschleunigungssensors (4) in einem dreidimensionalen Koordinatensystem erfasst wird.

3. Verfahren nach einem der vorhergehenden Ansprüche, **dadurch gekennzeichnet, dass** das Einleiten von Steuer- bzw. Regelmaßnahmen (8) ereignisbasiert durch Überschreitung von Schwellwerten für die Größe und/oder für den zeitlichen Gradient der Größe von der Abweichung (13), von der ersten Bewegung (7) und/oder von der zweiten Bewegung (11) mittels einer Entscheidungslogik (9) der Steuer- und Regelvorrichtung (5) vorgegeben wird.

4. Verfahren nach einem der vorhergehenden Ansprüche, **dadurch gekennzeichnet, dass** die Richtung und Größe der Beschleunigungen der landwirtschaftlichen Maschine (1) in der Steuer- und Regelvorrichtung (5) gespeichert werden, wobei mittels einer Erkennung von Grenzwertüberschreitungen der Größe der Beschleunigungen eine Zustandsüberwachung der landwirtschaftlichen Maschine (1) durchgeführt wird.

5. Verfahren nach einem der vorhergehenden Ansprüche, **dadurch gekennzeichnet, dass** das Steuern und/oder Regeln der Maschinenfunktionen der landwirtschaftlichen Maschine (1) zyklisch in Zeitschritten von 10ms bis 500ms durchgeführt wird.

6. Verfahren nach einem der vorhergehenden Ansprüche, **dadurch gekennzeichnet, dass** die Steuer- bzw. Regelmaßnahmen (8) durch Vorgabe von Justierparametern zum selektiven Antreiben und/oder Bremsen eines oder mehrerer Räder, Walzen oder Rollen an der landwirtschaftlichen Maschine (1) durchgeführt werden.

7. Verfahren nach einem der vorhergehenden Ansprüche, **dadurch gekennzeichnet, dass** die Steuer- bzw. Regelmaßnahmen (8) durch Vorgabe von Justierparametern zum selektiven Drehen eines oder mehrerer Räder, Walzen oder Rollen an der landwirtschaftlichen Maschine (1) durchgeführt werden.

8. Verfahren nach einem der vorhergehenden Ansprüche, **dadurch gekennzeichnet, dass** die Steuer- bzw. Regelmaßnahmen (8) durch Vorgabe von Justierparametern zum Veranlassen der Bewegung von zumindest einem Befestigungspunkt (14) der landwirtschaftlichen Maschine (1) am Zugfahrzeug (2) durchgeführt werden.

9. Verfahren nach einem der vorhergehenden Ansprüche, **dadurch gekennzeichnet, dass** Messwerte des Beschleunigungssensor (4) mittels der Steuer- und Regelvorrichtung (5) drahtlos empfangen werden.

10. Verfahren nach einem der vorhergehenden Ansprüche, **dadurch gekennzeichnet, dass** der Beschleunigungssensor (4) mittels eines Magnets, einer Klebeschicht oder einer form- und/oder reibschlüssigen Positioniervorrichtung (6) an der landwirtschaftlichen Maschine (1) angebracht wird, wobei der Beschleunigungssensor (4) von der landwirtschaftlichen Maschine (1) zerstörungsfrei entfernbar ist.

11. Verfahren nach einem der vorhergehenden Ansprüche, **dadurch gekennzeichnet, dass** der Beschleunigungssensor (4) mittels eines Nanogenerators durch Energiequellen umfassend Vibration, Umgebungstemperatur, Luftströmung oder Sonneneinstrahlung elektrisch versorgt wird.

12. Verfahren nach einem der vorhergehenden Ansprüche, **dadurch gekennzeichnet, dass** der Beschleunigungssensor (4) mittels der Steuer- und Regelvorrichtung (5) vor und/oder nach dem Bewegen der landwirtschaftlichen Maschine (1) über die Ackerfläche kalibriert wird.

13. Verfahren nach einem der Ansprüche 3 bis 12, **dadurch gekennzeichnet, dass** in der Entscheidungslogik (9) weiters Positions- bzw. Fahrszenario-Informationen aus der ersten Bewegung bestimmt werden, wobei eine Hangneigung absolut zur Erdbeschleunigung, ein Hangrutschen, eine Fahrtgeschwindigkeit, eine Vorwärtsbewegung, eine Rückwärtsfahrt, ein Stoppen oder eine Kurvenfahrt der landwirtschaftlichen Maschine (1) als Positions- bzw. Fahrszenario-Informationen umfasst sind.

14. Verfahren nach Anspruch 13, **dadurch gekennzeichnet, dass** eine Differenzierung zwischen der Kurvenfahrt und der Hangneigung bzw. dem Hangrutschen wenigstens auf Basis einer Drehbeschleunigung um eine Achse entlang der Fahrtrichtung und einer Längsbeschleunigung quer zur Achse entlang der Fahrtrichtung der landwirtschaftlichen Maschine (1) ermittelt bzw. durchgeführt wird.

15. Verfahren nach einem der vorhergehenden Ansprüche, **dadurch gekennzeichnet, dass** die landwirtschaftliche Maschine eine Ballenpresse mit Aufnahmevorrichtung und Liftachse ist und das Verfahren die folgenden Verfahrensschritte umfasst:
- Anheben der Aufnahmevorrichtung bei Rückwärtsfahrt, und/oder
- Anheben der Liftachse bei Kurvenfahrt, und/oder
- Anheben der Liftachse bei Rückwärtsfahrt, und/oder
- Anheben der Aufnahmevorrichtung bei Kurvenfahrt bei Überschreitung eines Grenzwertes für den Kurvenradius.

16. Verfahren nach einem der Ansprüche 1 bis 14, **dadurch gekennzeichnet, dass** die landwirtschaftliche Maschine ein Mähwerk ist und das Verfahren die folgenden Verfahrensschritte umfasst:
- Anheben des Mähwerks bei Rückwärtsfahrt, und/oder
- Verschieben des Mähwerks bei Hangrutschen, und/oder
- Verschieben des Mähwerks bei Kurvenfahrt.

17. Verfahren nach einem der Ansprüche 1 bis 14, **dadurch gekennzeichnet, dass** die landwirtschaftliche Maschine ein Ladewagen ist und das Verfahren die folgenden Verfahrensschritte umfasst:
- in Mittelstellung bringen und Sperren einer in Schwimmstellung befindlichen Nachlaufachse bzw. der Lenkachse bei Rückwärtsfahrt, und/oder
- in Mittelstellung bringen und Sperren der in Schwimmstellung befindlichen Nachlaufachse bzw. der Lenkachse beim Überschreiten eines Grenzwertes der Hangneigung, und/oder
- in Mittelstellung bringen und Sperren der in Schwimmstellung befindlichen Nachlaufachse bzw. der Lenkachse beim Überschreiten eines Grenzwertes der Geschwindigkeit.

18. Verfahren nach einem der Ansprüche 1 bis 14, **dadurch gekennzeichnet, dass** die landwirtschaftliche Maschine ein Hackgerät ist und das Verfahren die folgenden Verfahrensschritte umfasst:
- Anheben des Hackgeräts bei Rückwärtsfahrt, und/oder
- Anheben des Hackgeräts bei Kurvenfahrt bei Überschreitung eines Grenzwertes für den Kurvenradius, und/oder
- Verschieben des Hackgeräts bei Hangrutschen.

19. Landwirtschaftliches System (3) umfassend eine landwirtschaftliche Maschine mit einem Beschleunigungssensor (4) und eine Steuer- und Regelvorrichtung (5), **dadurch gekennzeichnet, dass** die Steuer- und Regelvorrichtung (5) zum Durchführen des Verfahrens, nach einem der vorhergehenden Ansprüche, ausgebildet ist.

20. Landwirtschaftliches System (3) nach Anspruch 19, **dadurch gekennzeichnet, dass** die landwirtschaftliche Maschine eine Positioniervorrichtung (6) für den Beschleunigungssensor (4) umfasst.

21. Landwirtschaftliches System (3) nach Anspruch 19, **dadurch gekennzeichnet, dass** das landwirtschaftliche System (3) ein Zugfahrzeug (2) umfasst, wobei die Steuer- und Regelvorrichtung (5) am Zugfahrzeug (2) positioniert ist.

## Claims

1. A method for controlling and/or regulating the machine functions of an agricultural machine (1), the method comprising the following method steps:
- moving and/or driving the agricultural machine (1) across a working area of a work surface by means of a towing vehicle (2);
- detecting the direction and magnitude of the accelerations of the agricultural machine (1) by means of an acceleration sensor (4);
- detecting the direction and magnitude of at least one motion parameter (10), comprising jerk, acceleration, velocity, or travel path of the towing vehicle (2);
- calculating a first motion (7) of the agricultural machine (1) based on the detected accelerations using a control and regulation device (5);
- calculating a second motion (11) of the towing vehicle (2) based on the at least one motion parameter (10) by means of the control and regulation device (5);
- automatically initiating control and/or regulation measures (8) during operation of the agricultural machine (1) based on the first motion (7) of the agricultural machine (1) by means of the control and regulation device (5);
**characterized by** the method steps:
- calculating a target motion (12) of the agricultural machine (1) based on the second motion (11) of the towing vehicle (2) by means of the control and regulation device (5);
- calculating a deviation (13) between the first motion (7) and the target motion (12) of the agricultural machine (1) by means of the control and regulation device (5);
- adjusting the control and/or regulation measures (8) using adjustment parameters, wherein the adjustment parameters are calculated based on the deviation (13).

2. The method according to claim 1, **characterized in that** the direction and magnitude of the acceleration are detected by the acceleration sensor (4) in a three-dimensional coordinate system.

3. The method according to one of the preceding claims, **characterized in that** the initiation of control or regulation measures (8) is determined event-based by the exceedance of threshold values for the magnitude and/or the temporal gradient of the magnitude of the deviation (13), of the first motion (7), and/or of the second motion (11) by means of a decision logic (9) of the control and regulation device (5).

4. The method according to one of the preceding claims, **characterized in that** the direction and magnitude of the accelerations of the agricultural machine (1) are stored in the control and regulation device (5), wherein a condition monitoring of the agricultural machine (1) is performed by a detection of threshold value exceedances of the magnitude of the accelerations.

5. The method according to of the preceding claims, **characterized in that** the control and/or regulation of the machine functions of the agricultural machine (1) is performed cyclically in time steps ranging from 10 ms to 500 ms.

6. The method according to one of the preceding claims, **characterized in that** the control and/or regulation measures (8) are carried out by specifying adjustment parameters for selectively driving and/or braking one or more wheels, rollers, or casters on the agricultural machine (1).

7. The method according to one of the preceding claims, **characterized in that** the control or regulation measures (8) are carried out by specifying adjustment parameters for selectively rotating one or more wheels, rollers, or casters on the agricultural machine (1).

8. The method according to one of the preceding claims, **characterized in that** the control or regulation measures (8) are carried out by specifying adjustment parameters to cause the motion of at least one attachment point (14) of the agricultural machine (1) on the towing vehicle (2).

9. The method according to one of the preceding claims, **characterized in that** measurement values from the acceleration sensor (4) are received wirelessly by means of the control and regulation device (5).

10. The method according to one of the preceding claims, **characterized in that** the acceleration sensor (4) is attached to the agricultural machine (1) by means of a magnet, an adhesive layer, or a form-fitting and/or friction-locking positioning device (6), wherein the acceleration sensor (4) can be removed from the agricultural machine (1) without causing damage.

11. The method according to one of the preceding claims, **characterized in that** the acceleration sensor (4) is electrically powered by means of a nanogenerator using energy sources including vibration, ambient temperature, airflow, or solar radiation.

12. The method according to one of the preceding claims, **characterized in that** the acceleration sensor (4) is calibrated by means of the control and regulation device (5) before and/or after the agricultural machine (1) moves across the arable land.

13. The method according to one of claims 3 to 12, **characterized in that** further, in the decision logic (9), position and/or driving scenario information are determined from the first motion, wherein a slope inclination relative to gravitational acceleration, a slope slippage, a driving velocity, a forward motion, a reverse travel, a stopping, or a turning of the agricultural machine (1) are comprised as position and/or driving scenario information.

14. The method according to claim 13, **characterized in that** a distinction between the turning and the slope inclination and/or the slope slippage is determined and/or performed at least on the basis of an angular acceleration about an axis along the direction of travel and a longitudinal acceleration transverse to the axis along the direction of travel of the agricultural machine (1).

15. The method according to one of the preceding claims, **characterized in that** the agricultural machine is a baler with a pick-up device and a lift axle, and the method comprises the following method steps:
- raising the pick-up device during reverse travel, and/or
- raising the lift axle while turning, and/or
- raising the lift axle during reverse travel, and/or
- raising the pick-up device while turning when a threshold value for the turning radius is exceeded.

16. The method according to one of claims 1 to 14, **characterized in that** the agricultural machine is a mower and the method comprises the following method steps:
- raising the mower during reverse travel, and/or
- shifting the mower during slope slippage, and/or
- shifting the mower while turning.

17. The method according to one of claims 1 to 14, **characterized in that** the agricultural machine is a loader wagon and the method comprises the following method steps:
- moving a trailing axle and/or the steering axle, which is in a floating position, to a central position and locking it during reverse travel, and/or
- moving a trailing axle and/or the steering axle, which is in a floating position, to a central position and locking it when a threshold of the slope slippage is exceeded, and/or
- bringing the trailing axle and/or the steering axle, which is in a floating position, into the center position and locking it when a threshold of the velocity is exceeded.

18. The method according to one of claims 1 to 14, **characterized in that** the agricultural machine is a hoeing implement and the method comprises the following method steps:
- raising the hoeing implement during reverse travel, and/or
- raising the hoeing implement while turning if a threshold value for the turning radius is exceeded, and/or
- shifting the hoeing implement during slope slippage.

19. An agricultural system (3) comprising an agricultural machine with an acceleration sensor (4) and a control and regulation device (5), **characterized in that** the control and regulation device (5) is configured to carry out the method according to one of the preceding claims.

20. The agricultural system (3) according to claim 19, **characterized in that** the agricultural machine comprises a positioning device (6) for the acceleration sensor (4).

21. The agricultural system (3) according to claim 19, **characterized in that** the agricultural system (3) comprises a towing vehicle (2), wherein the control and regulation device (5) is positioned on the towing vehicle (2).

## Revendications

1. Procédé de commande et/ou de réglage de fonctions de machine d'une machine agricole (1), le procédé comprenant les étapes de procédé consistant à :
- déplacer et/ou entraîner la machine agricole (1) sur une zone de travail d'une surface de travail au moyen d'un véhicule tracteur (2) ;
- détecter la direction et l'amplitude des accélérations de la machine agricole (1) au moyen d'un accéléromètre (4) ;
- détecter la direction et l'amplitude d'au moins un paramètre de déplacement (10) comprenant une secousse, une accélération, une vitesse ou une distance parcourue du véhicule tracteur (2) ;
- calculer un premier déplacement (7) de la machine agricole (1) sur la base des accélérations détectées au moyen d'un dispositif de commande et de réglage (5) ;
- calculer un second déplacement (11) du véhicule tracteur (2) sur la base du au moins un paramètre de déplacement (10) au moyen du dispositif de commande et de réglage (5) ;
- déclencher automatiquement des mesures de commande ou de réglage (8) lors du fonctionnement de la machine agricole (1) sur la base du premier déplacement (7) de la machine agricole (1) au moyen du dispositif de commande et de réglage (5) ;
**caractérisé par** les étapes de procédé consistant à :
- calculer un déplacement de consigne (12) de la machine agricole (1) sur la base du second déplacement (11) du véhicule tracteur (2) au moyen du dispositif de commande et de réglage (5) ;
- calculer un écart (13) entre le premier déplacement (7) et le déplacement de consigne (12) de la machine agricole (1) au moyen du dispositif de commande et de réglage (5) ;
- ajuster les mesures de commande ou de réglage (8) par l'intermédiaire de paramètres d'ajustement, dans lequel les paramètres d'ajustement sont calculés sur la base de l'écart (13).

2. Procédé selon la revendication 1, **caractérisé en ce que** la direction et l'amplitude de l'accélération sont détectées au moyen de l'accéléromètre (4) dans un système de coordonnées tridimensionnel.

3. Procédé selon l'une quelconque des revendications précédentes, **caractérisé en ce que** l'initiation de mesures de commande ou de régulation (8) est prescrite sur la base d'un événement de dépassement de valeurs de seuil pour l'amplitude et/ou pour le gradient temporel de l'amplitude de l'écart (13), du premier déplacement (7) et/ou du second déplacement (11) au moyen d'une logique de décision (9) du dispositif de commande et de réglage (5).

4. Procédé selon l'une quelconque des revendications précédentes, **caractérisé en ce que** la direction et l'amplitude des accélérations de la machine agricole (1) sont enregistrées dans le dispositif de commande et de réglage (5), dans lequel une surveillance de l'état de la machine agricole (1) est effectuée au moyen d'une détection de dépassements de valeurs limites de l'amplitude des accélérations.

5. Procédé selon l'une quelconque des revendications précédentes, **caractérisé en ce que** la commande et/ou le réglage des fonctions de machine de la machine agricole (1) sont effectués de manière cyclique par intervalle de temps de 10 ms à 500 ms.

6. Procédé selon l'une quelconque des revendications précédentes, **caractérisé en ce que** les mesures de commande ou de réglage (8) sont effectuées en spécifiant des paramètres d'ajustement pour l'entraînement et/ou le freinage sélectif d'une ou de plusieurs roues, d'un ou de plusieurs cylindres ou rouleaux sur la machine agricole (1).

7. Procédé selon l'une quelconque des revendications précédentes, **caractérisé en ce que** les mesures de commande ou de réglage (8) sont effectuées en spécifiant des paramètres d'ajustement pour la mise en rotation sélective d'une ou de plusieurs roues, d'un ou de plusieurs cylindres ou rouleaux sur la machine agricole (1).

8. Procédé selon l'une quelconque des revendications précédentes, **caractérisé en ce que** les mesures de commande ou de réglage (8) sont effectuées en spécifiant des paramètres d'ajustement pour provoquer le déplacement d'au moins un point de fixation (14) de la machine agricole (1) sur le véhicule tracteur (2).

9. Procédé selon l'une quelconque des revendications précédentes, **caractérisé en ce que** les valeurs de mesure de l'accéléromètre (4) sont reçues sans fil au moyen du dispositif de commande et de réglage (5).

10. Procédé selon l'une quelconque des revendications précédentes, **caractérisé en ce que** l'accéléromètre (4) est fixé à la machine agricole (1) au moyen d'un aimant, d'une couche de colle ou d'un dispositif de positionnement (6) par complémentarité de forme et/ou par friction, dans lequel l'accéléromètre (4) peut être retiré de la machine agricole (1) de manière non destructive.

11. Procédé selon l'une quelconque des revendications précédentes, **caractérisé en ce que** l'accéléromètre (4) est alimenté électriquement au moyen d'un nanogénérateur par des sources d'énergie comprenant des vibrations, une température ambiante, un flux d'air ou un rayonnement solaire.

12. Procédé selon l'une quelconque des revendications précédentes, **caractérisé en ce que** l'accéléromètre (4) est calibré au moyen du dispositif de commande et de réglage (5) avant et/ou après le déplacement de la machine agricole (1) sur la surface agricole.

13. Procédé selon l'une quelconque des revendications 3 à 12, **caractérisé en ce que** des informations de position ou de scénario de conduite sont en outre déterminées à partir du premier déplacement dans la logique de décision (9), dans lequel une inclinaison de pente absolue par rapport à l'accélération de la terre, un glissement de pente, une vitesse de déplacement, un déplacement vers l'avant, une conduite en marche arrière, un arrêt ou une conduite en virage de la machine agricole (1) sont inclus en tant qu'informations de position ou de scénario de conduite.

14. Procédé selon la revendication 13, **caractérisé en ce qu'**une différenciation entre la conduite en virage et l'inclinaison de pente ou le glissement de pente est déterminée ou réalisée au moins sur la base d'une accélération angulaire autour d'un axe le long de la direction de déplacement et d'une accélération longitudinale transversale à l'axe le long de la direction de déplacement de la machine agricole (1).

15. Procédé selon l'une quelconque des revendications précédentes, **caractérisé en ce que** la machine agricole est une presse à balles avec un dispositif de réception et un essieu relevable, et le procédé comprend les étapes de procédé suivantes consistant à :
- lever le dispositif de réception lors d'une conduite en marche arrière, et/ou
- lever l'essieu relevable lors d'une conduite en virage, et/ou
- lever l'essieu relevable lors d'une conduite en marche arrière, et/ou
- lever le dispositif de réception lors d'une conduite en virage en cas de dépassement d'une valeur limite pour le rayon de virage.

16. Procédé selon l'une quelconque des revendications 1 à 14, **caractérisé en ce que** la machine agricole est une unité de coupe, et le procédé comprend les étapes de procédé suivantes consistant à :
- lever l'unité de coupe lors d'une conduite en marche arrière, et/ou
- bouger l'unité de coupe lors de glissades en pente, et/ou
- bouger l'unité de coupe lors d'une conduite en virage.

17. Procédé selon l'une quelconque des revendications 1 à 14, **caractérisé en ce que** la machine agricole est une autochargeuse, et le procédé comprend les étapes de procédé suivantes consistant à :
- mettre en position centrale et bloquer un essieu suiveur en position flottante ou l'essieu directeur en marche arrière, et/ou
- mettre en position centrale et bloquer l'essieu suiveur ou l'essieu directeur en position flottante en cas de dépassement d'une valeur limite de l'inclinaison de la pente, et/ou
- mettre en position centrale et bloquer l'essieu suiveur ou l'essieu directeur en position flottante en cas de dépassement d'une valeur limite de la vitesse.

18. Procédé selon l'une quelconque des revendications 1 à 14, **caractérisé en ce que** la machine agricole est une herse, et le procédé comprend les étapes de procédé suivantes consistant à :
- lever la herse lors d'une conduite en marche arrière, et/ou
- lever la herse lors d'une conduite en virage en cas de dépassement d'une valeur limite pour le rayon de virage, et/ou
- déplacer la herse en cas de glissement en pente.

19. Système agricole (3) comprenant une machine agricole avec un accéléromètre (4) et un dispositif de commande et de réglage (5), **caractérisé en ce que** le dispositif de commande et de réglage (5) est conçu pour exécuter le procédé selon l'une quelconque des revendications précédentes.

20. Système agricole (3) selon la revendication 19, **caractérisé en ce que** la machine agricole comprend un dispositif de positionnement (6) pour l'accéléromètre (4).

21. Système agricole (3) selon la revendication 19, **caractérisé en ce que** le système agricole (3) comprend un véhicule tracteur (2), dans lequel le dispositif de commande et de réglage (5) est positionné sur le véhicule tracteur (2).
